# FASCICULE DE BREVET EUROPEEN

(11) **EP 1 634 519 B1**
(45) Date de publication et mention de la délivrance du brevet: **03.06.2009**
(21) Numéro de dépôt: 05356149.4
(22) Date de dépôt: 09.09.2005
(51) Int. Cl.: A47J 27/092, A47J 27/09

(54) **Appareil de cuisson sous pression à décompression optimisée**
Druckgargerät mit optimiertem Druckablass
Pressure cooker with optimised pressure release

(30) Priorité: 09.09.2004 FR 0409594
(43) Date de publication de la demande: 15.03.2006
(73) Titulaire: SEB S.A., 69132 Ecully Cedex (FR)
(72) Inventeur: Anota, Daniel, 21000 Dijon (FR); Chameroy, Eric, 21260 Veronnes (FR); Seurat Guiochet, Claire Marie-Aurore, 21000 Dijon (FR)
(74) Mandataire: Martin, Didier Roland Valéry

(56) Documents cités:
- EP-A- 0 651 962
- DE-A1- 2 353 384
- FR-A- 2 455 875

## Description

La présente invention se rapporte au domaine technique général des appareils domestiques de cuisson d'aliments, destinés à former une enceinte de cuisson étanche, au sein de laquelle sont cuits des aliments sous pression de vapeur.

La présente invention concerne plus particulièrement un appareil domestique de cuisson d'aliments sous pression agencé pour former une enceinte de cuisson, ledit appareil comprenant un organe d'ajustement de la pression à l'intérieur de l'enceinte, ledit organe comprenant lui-même un conduit de fuite permettant l'établissement d'un écoulement de fuite de vapeur de l'intérieur de l'enceinte vers l'extérieur de l'appareil, ledit conduit définissant d'une part une section d'entrée de vapeur, par laquelle la vapeur contenue dans l'enceinte entre dans le conduit, et d'autre part une section de passage, située à l'aval de la section d'entrée dans le sens de l'écoulement de fuite.

La présente invention concerne également un procédé de cuisson d'aliments à l'aide d'un appareil domestique de cuisson sous pression agencé pour former une enceinte de cuisson.

Les appareils de cuisson à usage domestique, du genre autocuiseur, sont bien connus dans l'art antérieur. lls permettent de réaliser une enceinte hermétique au sein de laquelle sont placés les aliments, ladite enceinte pouvant atteindre des pressions et températures élevées lorsque l'appareil est soumis à l'influence d'une source de chauffe.

Les effets conjugués des niveaux élevés de pression et de température atteints dans ces appareils connus permettent ainsi de réaliser une cuisson des aliments extrêmement rapide, tout en étant respectueuse des propriétés organoleptique et nutritionnelle des aliments.

Afin que l'utilisateur puisse ouvrir le couvercle en toute sécurité, sans risque d'échappement brutal dudit couvercle sous l'effet de la pression, il est nécessaire de décompresser au préalable l'appareil.

Pour décompresser un appareil de cuisson conforme à l'art antérieur, il existe plusieurs possibilités.

Il est ainsi possible de placer l'appareil sous un jet d'eau froide.

Une telle solution est cependant peu satisfaisante, car elle implique un temps de décompression relativement long avant que l'enceinte atteigne une pression compatible avec une ouverture sécurisée du couvercle.

Une telle méthode de décompression s'avère également relativement malaisée à exécuter par l'utilisateur, car elle implique le déplacement de l'appareil lourd et brûlant, avec tout l'inconfort et le risque afférents, vers un point d'eau.

Une telle méthode est de plus impraticable dans le cas où l'utilisateur souhaite effectuer une décompression en cours de cuisson, afin d'ouvrir le couvercle pour vérifier l'état d'avancement de la cuisson ou simplement pour ajouter un ingrédient. Dans ce cas, l'utilisateur serait en effet contraint de replacer l'appareil de cuisson sur la source de chauffe alors que ce dernier est mouillé, ce qui contribuerait notamment à salir, voire endommager, la source de chauffe et son environnement.

Une autre méthode, prévue d'ailleurs par de nombreux fabricants d'appareils de cuisson sous pression, consiste à agir sur la soupape de régulation de l'appareil, lorsque ce dernier en est bien sûr pourvu, de façon à mettre en communication l'intérieur de l'enceinte avec l'extérieur. Une telle méthode s'avère généralement particulièrement intéressante, puisqu'elle ne nécessite la plupart du temps qu'une gestuelle très simple (actionnement d'une manette ou enlèvement de la soupape).

Cependant, cette méthode ne donne pleinement satisfaction que lorsque l'utilisateur est familier de la cuisson sous pression avec son appareil. Dans le cas contraire, il existe un risque que l'utilisateur provoque la projection de matières alimentaires brûlantes lors de la décompression.

De surcroît, la décompression obtenue à l'aide de cette méthode est généralement relativement longue, ce qui interdit à l'utilisateur de la mettre en oeuvre en cours de cuisson afin de vérifier rapidement l'état d'avancement de la cuisson ou pour ajouter un ingrédient.

Un appareil domestique de cuisson d'aliments sous pression et un procédé de cuisson d'aliments à l'aide d'un tel appareil est décrit dans le document DE-A-2353384.

L'objet de l'invention vise en conséquence à proposer un nouvel appareil domestique de cuisson d'aliments sous pression portant remède aux différents inconvénients énumérés précédemment et qui permette une décompression sûre et rapide, même en cours de cuisson, tout en étant d'une conception simple et économique.

Un autre objet de l'invention vise à proposer un nouvel appareil domestique de cuisson d'aliments sous pression de conception particulièrement simplifiée.

Un autre objet de l'invention vise à proposer un nouvel appareil domestique de cuisson d'aliments sous pression permettant un excellent contrôle du flux de décompression.

Un autre objet de l'invention vise à proposer un nouvel appareil domestique de cuisson d'aliments sous pression dont le fonctionnement repose sur des principes mécaniques simples et éprouvés.

Un autre objet de l'invention vise à proposer un nouvel appareil domestique de cuisson d'aliments sous pression mettant en oeuvre des moyens mécaniques compacts et robustes.

Un autre objet de l'invention vise à proposer un nouvel appareil domestique de cuisson d'aliments sous pression construit à partir d'un minimum de pièces.

Un autre objet de l'invention vise à proposer un nouvel appareil domestique de cuisson d'aliments sous pression particulièrement sûr.

Un autre objet de l'invention vise à proposer un nouvel appareil domestique de cuisson d'aliments sous pression dont la décompression est particulièrement rapide et sécurisée.

Un autre objet de l'invention vise à proposer un nouveau procédé de cuisson d'aliments à l'aide d'un appareil domestique de cuisson sous pression permettant une décompression de l'appareil particulièrement rapide, simple, sûre et propre, même en cours de cuisson.

Les objets assignés à l'invention sont atteints à l'aide d'un appareil domestique de cuisson d'aliments sous pression selon la revendication 1.

Les objets assignés à l'invention sont également atteints grâce à un procédé de cuisson d'aliments selon la revendication 21. part une étape de décompression, au cours de laquelle on règle, à l'aide du moyen de réglage, les sections d'entrée et de passage pour permettre une décompression la plus rapide possible de l'enceinte jusqu'à la pression de sécurité prédéterminée, sans projection sensible d'aliments vers l'extérieur de l'appareil.

D'autres particularités et avantages de l'invention apparaîtront et ressortiront plus en détails à la lecture de la description faite ci-après, en référence aux dessins, annexés donnés à titre purement illustratif et non limitatif, dans lesquels :
- La figure 1 illustre, selon une vue générale en perspective, un appareil domestique de cuisson conforme à l'invention.
- La figure 2 illustre, selon une vue schématique en perspective, le couvercle d'un appareil domestique de cuisson conforme à l'invention.
- La figure 3 illustre, selon une vue schématique en perspective, un détail de réalisation d'un module de commande destiné à être rapporté sur le couvercle représenté à la figure 2.
- La figure 4 illustre, selon une vue de dessus, le module de commande dont un détail de réalisation est représenté à la figure 3, ledit module se trouvant en configuration d'ouverture.
- La figure 5 illustre, selon une vue de dessus, le détail de réalisation du module représenté à la figure 3, lorsque ledit module est en configuration d'ouverture.
- La figure 6 représente un détail d'une vue en coupe partielle selon A-A du module représenté à la figure 5.
- La figure 7 illustre, selon une vue de dessus, le module de la figure 4 en configuration de décompression.
- La figure 8 illustre, selon une vue de dessus, le détail de réalisation du module représenté à la figure 3 lorsque ledit module est en configuration de décompression.
- La figure 9 est une vue en coupe transversale selon A-A du module représenté à la figure 8.
- La figure 10 représente, selon une vue de dessus, le module de commande des figures 4 et 7 en configuration de cuisson.
- La figure 11 illustre, selon une vue de dessus, le détail de réalisation illustré à la figure 3 lorsque le module de commande est en configuration de cuisson.
- La figure 12 est une vue partielle en coupe selon A-A du module de commande représenté à la figure 11.
- La figure 13 est une vue en perspective du dessous du module de commande représenté notamment aux figures 4, 7 et 10.

L'appareil de cuisson conforme à l'invention est destiné à assurer la cuisson de différents aliments sous pression dans un contexte domestique.

De façon préférentielle, l'appareil de cuisson 1 conforme à l'invention est un appareil de type autocuiseur.

De façon classique, l'appareil 1 conforme à l'invention est agencé pour former une enceinte de cuisson, laquelle est de préférence sensiblement étanche et destinée à être soumise à l'action d'une source de chauffe, telle qu'une plaque de cuisson ou une résistance électrique embarquée.

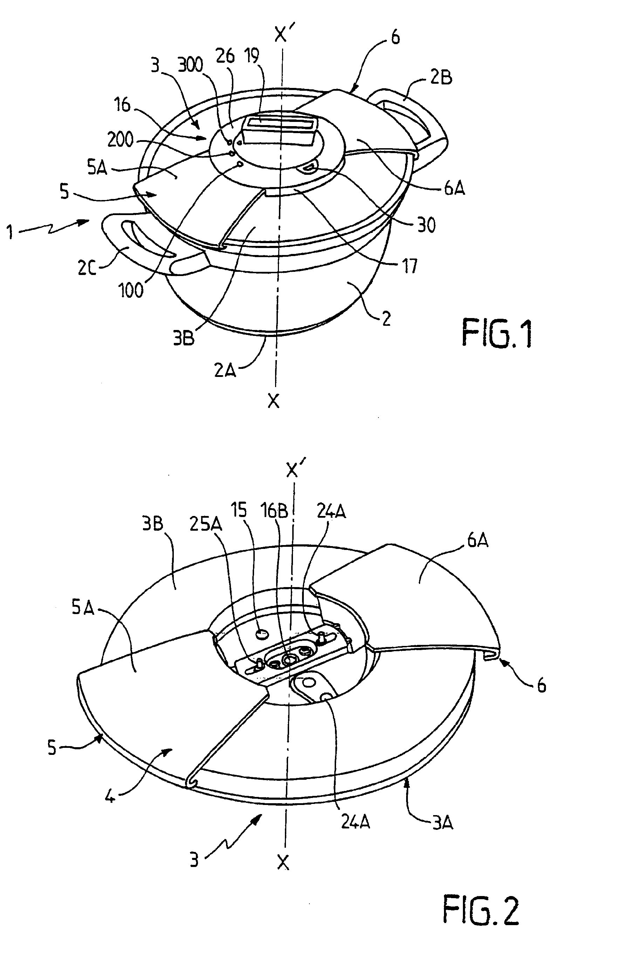

Avantageusement, l'appareil de cuisson 1 conforme à l'invention comprend une cuve 2 formant récipient de cuisson et présentant de façon préférentielle sensiblement une symétrie de révolution selon un axe X-X' (cf. figure 1).

Par la suite, l'adjectif *« axial »* se référera à la direction de cet axe de symétrie X-X', direction qui s'apparente à la direction verticale lorsque l'appareil est en fonctionnement normal.

La cuve 2 est de manière classique fabriquée à partir d'un matériau métallique tel que de l'acier inoxydable, et est préférentiellement pourvu d'un fond thermo-conducteur 2A solidarisé à la cuve par exemple par frappe à chaud.

La cuve 2 peut également comporter des organes de préhension telles que des poignées 2B, 2C préférentiellement en nombre de deux, et fixées sur la cuve 2 de façon diamétralement opposée par exemple (cf. figure 1).

L'appareil 1 conforme à l'invention comprend également avantageusement un couvercle 3 destiné à être rapporté et verrouillé sur la cuve 2 pour former avec cette dernière une enceinte de cuisson. La cuve 2 et le couvercle 3 sont conçus pour que l'enceinte soit suffisamment hermétique pour permettre une montée en pression de l'appareil.

Le couvercle 3, dont la forme est de préférence complémentaire à celle de la cuve 2 et par exemple est de forme générale discoïde, comprend d'une part une face interne 3A destinée à se trouver en regard de la cuve 2 lorsque le couvercle est verrouillé sur cette dernière, et d'autre part une face externe 3B opposée à ladite face interne 3A, ladite face externe 3B étant destinée à être orientée vers l'extérieur de la cuve 2, lorsque la cuve 2 et le couvercle 3 forment l'enceinte de cuisson.

Le couvercle 3 peut être verrouillé ou déverrouillé sur la cuve 2 grâce à un moyen de verrouillage / déverrouillage 4 du couvercle 3 relativement à la cuve 2 (représenté en particulier aux figures 1 et 2).

Le moyen de verrouillage / déverrouillage 4 peut être de tout type connu de l'homme du métier, et de façon classique est susceptible d'évoluer entre d'une part au moins une position de verrouillage du couvercle 3 relativement à la cuve 2, dans laquelle le couvercle 3 est solidarisé à la cuve 2, et d'autre part au moins une position de déverrouillage du couvercle 3 relativement à la cuve 2, dans laquelle le couvercle 3 peut être séparé, par exemple manuellement, de la cuve 2 par l'utilisateur.

A titre d'exemple d'un moyen de verrouillage / déverrouillage 4 utilisable dans le cadre de l'invention, on peut citer notamment les systèmes à mâchoires (correspondant à la variante représentée aux figures), à segments, à baïonnettes ou encore à étriers, cette liste n'étant nullement limitative.

Dans le cas illustré aux figures, le moyen de verrouillage / déverrouillage 4 de l'appareil conforme à l'invention comprend deux mâchoires 5, 6 montées de façon diamétralement opposée en translation radiale sur le couvercle 3, par l'intermédiaire d'un bras d'entraînement correspondant 5A, 6A.

De façon classique, lesdites mâchoires 5, 6 se présentent sous la forme d'une plaque métallique profilée en « U » à son extrémité extérieure, de façon à pouvoir enserrer les bords périphériques de cuve 2 et de couvercle 3.

Conformément à l'invention, l'appareil 1 comprend un organe d'ajustement 7 de la pression à l'intérieur de l'enceinte.

Conformément à l'invention, l'organe d'ajustement 7 comprend un conduit de fuite permettant l'établissement d'un écoulement de fuite de vapeur de l'intérieur de l'enceinte vers l'extérieur de l'appareil 1.

Ledit organe d'ajustement 7 est donc préférentiellement un organe permettant la mise en communication de l'intérieur de l'enceinte avec l'extérieur, en vue notamment de faire baisser la pression régnant dans ladite enceinte.

Conformément à l'invention, le conduit définit une section d'entrée 8 de vapeur, section par laquelle la vapeur contenue dans l'enceinte entre dans le conduit pour s'échapper vers l'extérieur.

Le conduit définit d'autre part une section de passage 9, de préférence distincte de la section d'entrée 8, ladite section de passage 9 étant située à l'aval de la section 8 dans le sens de l'écoulement de fuite.

En d'autres termes, l'écoulement de fuite de vapeur, après avoir traversé la section d'entrée 8, traversera la section de passage 9 avant de s'échapper hors de l'appareil 1.

Avantageusement, le conduit définit également une section de sortie de vapeur 10, distincte des sections d'entrée 8 et de passage 9, et située à l'aval de la section de passage 9 dans le sens de l'écoulement de fuite.

Ainsi, tel que cela est illustré aux figures, la vapeur s'échappant à travers le conduit de fuite de l'organe d'ajustement 7 de pression passera tout d'abord par la section d'entrée 8, puis par la section de passage 9, pour enfin sortir à travers la section de sortie 10.

Selon une caractéristique importante de l'invention, l'organe d'ajustement 7 comprend un moyen de réglage 11 de la section d'entrée 8 et de la section de passage 9.

En d'autres termes, le moyen de réglage 11, qui est de préférence unique et monobloc, permet de modifier, de préférence simultanément, la conformation et/ou le dimensionnement desdites sections d'entrée 8 et de passage 9, afin d'agir sur les caractéristiques du flux de vapeur s'échappant dans le conduit, et notamment sur la vitesse, le débit et le caractère laminaire ou turbulent dudit flux, cette liste étant non limitative.

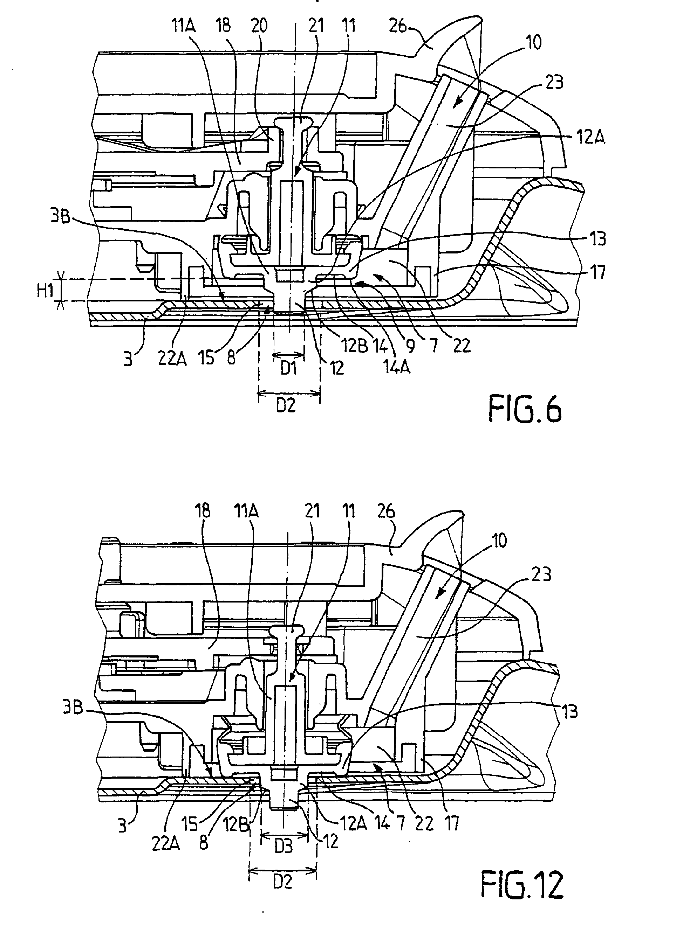

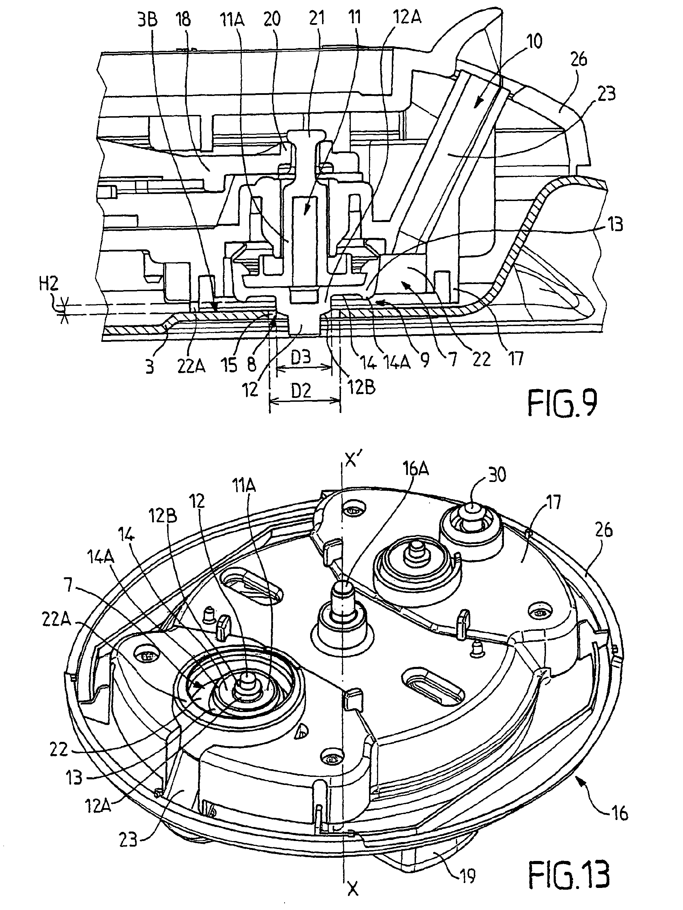

Conformément à l'invention, le moyen de réglage 11 est mobile entre au moins d'une part une position d'ouverture (représentée notamment à la figure 6) et d'autre part une position de décompression (représentée notamment à la figure 9), les positions d'ouverture et de décompression étant de préférence, tel que cela est illustré aux figures, des positions distinctes et stables.

Dans la position d'ouverture, le moyen de réglage 11 règle les sections d'entrée 8 et de passage 9 pour permettre une fuite de vapeur par le conduit de fuite, de l'intérieur de l'enceinte vers l'extérieur, tout en empêchant que la pression régnant au sein de l'enceinte puisse monter au-delà d'une pression de sécurité prédéterminée.

La position d'ouverture est donc une position de fuite, c'est-à-dire une position dans laquelle l'intérieur de l'enceinte est sensiblement en permanence en communication avec l'extérieur. De surcroît, dans la position d'ouverture, les sections d'entrée 8 et de passage 9 sont telles qu'elles empêchent, en permettant une fuite suffisante, que la pression dans l'enceinte devienne supérieure à une pression prédéterminée de sécurité, au-delà de laquelle un déverrouillage du couvercle serait dangereux car il pourrait entraîner en retour un échappement brutal du couvercle.

En d'autres termes, dans la position d'ouverture, qui est de préférence une position indexée comme cela sera décrit plus en détails par la suite, la section d'entrée 8 et la section de passage 9 sont conformées et dimensionnées l'une relativement à l'autre pour que le flux de fuite de vapeur passant à travers le conduit soit d'un débit suffisant relativement aux dimensions de l'enceinte de cuisson pour empêcher cette dernière de monter en pression au-delà d'un niveau prédéterminé de sécurité.

Cette pression de sécurité correspond à un niveau de pression régnant dans l'enceinte compatible avec une ouverture sécurisée du couvercle 3 par l'utilisateur. De manière préférentielle, la pression de sécurité n'excède pas de plus de 2 kPa la pression atmosphérique.

De façon préférentielle, l'organe d'ajustement 7 est conçu pour que lorsque le moyen de réglage 11 est en position d'ouverture, le débit de fuite de vapeur soit maximum, permettant ainsi de ramener le plus rapidement possible, compte-tenu des dimensions et de la conception de l'appareil 1, l'enceinte à la pression atmosphérique.

Dans la position de décompression, le moyen de réglage 11 règle les sections d'entrée 8 et de passage 9 pour permettre une décompression la plus rapide possible de l'enceinte jusqu'à ladite pression de sécurité prédéterminée, et sans projection sensible d'aliments vers l'extérieur de l'appareil.

Ainsi, lorsque le moyen de réglage 11 se trouve en position de décompression, les sections d'entrée 8 et de passage 9 sont conformées et dimensionnées pour évacuer avec le plus grand débit possible, la vapeur contenue dans l'enceinte, sous la forme d'un flux uniquement constitué de vapeur et sensiblement exempt d'aliments ou particules alimentaires contenus dans l'enceinte.

En d'autres termes, lorsque le moyen de réglage est dans sa position indexée de décompression, les sections d'entrée et de passage autorisent un flux dont le débit et le niveau de turbulence permettent la chute de pression la plus rapide possible en fonction des caractéristiques de l'appareil sans que les aliments présents au sein de l'enceinte ne soient entraînés et projetés vers l'extérieur.

Afin de conformer et de dimensionner les sections d'entrée 8 et de passage 9, l'homme du métier prendra en compte différents paramètres variables selon les appareils, tout en ayant à l'esprit que l'objectif à atteindre consiste :
- à assurer une décompression la plus rapide possible de l'appareil, et ce quel que soit le niveau de pression initial régnant dans l'enceinte, et en particulier lorsque ladite pression régnant dans l'enceinte correspond à la pression de cuisson (dite *« pression de régulation* ») de l'appareil,
- à générer un flux de fuite qui soit sensiblement exclusivement composé de vapeur, à l'exclusion de toutes particules alimentaires (liquides, solides ou pâteuses) de taille significative relativement aux exigences usuelles de sécurité et de propreté..

Les paramètres influents à prendre en compte sont notamment, conformément aux connaissances de l'homme du métier :
- la pression de fonctionnement (pression de régulation) de l'appareil,
- les dimensions de l'enceinte,
- la gamme de puissance de chauffe auquel peut être soumis l'appareil.

La demanderesse a ainsi mis en évidence que par le simple réglage de deux sections, à savoir les sections d'entrée 8 et de passage 9, en relation avec la conception du reste de l'appareil, on pouvait obtenir un flux de vapeur qui ne génère pas de projection alimentaire, et ce sans qu'il soit nécessaire d'utiliser des moyens de protection additionnels tels que des grilles ou des écrans montés dans le conduit ou en regard de ce dernier.

De manière préférentielle, lorsque le moyen de réglage 11 est en position de décompression, les sections d'entrée 8 et de passage 9 sont réglées pour permettre une décompression la plus rapide possible de l'enceinte jusqu'à la pression de sécurité prédéterminée, sans projection sensible des aliments vers l'extérieur de l'appareil et sans arrêter la source de chauffe auquel est soumise l'enceinte, de sorte que cette dernière est soumise en permanence à l'influence de la source de chauffe.

La position de décompression est donc bien évidemment elle aussi une position de fuite, c'est à dire une position dans laquelle l'enceinte de cuisson est sensiblement en permanence en communication avec l'extérieur, pour faire chuter la pression régnant dans l'enceinte.

L'utilisateur peut ainsi obtenir, en toute sécurité et propreté, la décompression de son appareil durant le processus de cuisson, sans couper la source de chauffe ou ôter l'appareil de la plaque de cuisson.

Avantageusement, la position d'ouverture et la position de décompression sont des positions indexées, c'est-à-dire prédéterminées et clairement identifiables en tant que telles par l'utilisateur, par exemple à l'aide d'un système de repérage visuel adapté 100, 200, 300.

Avantageusement, les sections d'entrée 8 et de passage 9 sont orienté sensiblement en oblique l'une par rapport à l'autre, c'est-à-dire que la section d'entrée 8 s'étend dans un plan d'entrée, tandis que la section de passage 9 s'étend dans un plan de passage, lesdits plans d'entrée et de passage étant sécants.

Ainsi, selon cette disposition, le flux de vapeur s'échappant par le conduit sera contraint, après être passé par la section d'entrée 8 d'effectuer un virage d'un angle plus ou moins aigu pour passer à travers la section de passage 9.

Cette conformation permet en particulier un excellent contrôle du flux de fuite de vapeur et contribue à éviter, en combinaison avec un dimensionnement et une conformation adéquate des sections d'entrée 8 et de passage 9, des projections alimentaires indésirables vers l'extérieur lorsque le moyen de réglage 11 est en positon de décompression.

De façon encore plus préférentielle, les sections d'entrée 8 et de passage 9 sont orientées sensiblement transversalement l'une par rapport à l'autre, c'est-à-dire que le flux de vapeur est contraint d'effectuer un virage sensiblement à 90° entre la section d'entrée 8 et la section de passage 9.

Avantageusement, l'appareil 1 conforme à l'invention comprend une soupape de régulation de pression 11A.

De façon préférentielle, ladite soupape 11A forme le moyen de réglage 11. Ainsi, la soupape de régulation de pression 11A assure une double fonction puisque d'une part elle contribue au réglage des sections d'entrée 8 et de passage 9, comme on l'a expliqué précédemment et d'autre part elle contribue au maintien de l'enceinte de cuisson à un niveau prédéterminé de pression, appelé classiquement pression de fonctionnement ou de régulation.

Par conséquent, selon ce mode de réalisation de l'invention qui correspond à celui illustré aux figures, le moyen de réglage 11, formé par la soupape 11A, est susceptible de se trouver dans au moins une position indexée de régulation (illustrée à la figure 12) dans laquelle d'une part, il interdit sensiblement toute communication de l'intérieur de l'enceinte vers l'extérieur tant que la pression régnant dans l'enceinte est inférieure à la pression de régulation prédéterminée et d'autre part, il met en communication l'intérieur de l'enceinte avec l'extérieur dès que la pression régnant dans l'enceinte atteint sensiblement ladite pression de régulation prédéterminée.

Dans la variante illustrée aux figures, la soupape 11A interdit la communication de l'intérieur de l'enceinte avec l'extérieur tant que la pression régnant dans l'enceinte est inférieure à la pression de régulation, en supprimant sensiblement la section de passage 9, tel que cela est illustré à la figure 12, de sorte que la vapeur n'est plus en mesure de poursuivre son chemin jusqu'à la sortie, du moins tant que la pression régnant dans l'enceinte est inférieure à la pression de régulation.

Avantageusement, le moyen de réglage 11, formé en l'occurrence par la soupape 11A, est monté à coulissement sur le couvercle 3, de préférence sensiblement selon la direction axiale X-X'.

De façon préférentielle, la soupape 11A est montée à coulissement axial élastique relativement au couvercle, de telle sorte que la position dans laquelle elle interdit sensiblement toute communication de l'intérieur de l'enceinte avec l'extérieur tant que la pression dans l'enceinte est inférieure à une pression de régulation prédéterminée (représentée à la figure 12), est une position de rappel élastique, obtenue de préférence sous l'effet d'un ressort de compression (non représenté)

De façon préférentielle, la soupape 11A comprend un corps cylindrique présentant au moins deux tronçons 12, 13 séparés par un épaulement 14, ledit épaulement 14 contribuant au réglage de la section de passage 9, tandis qu'au moins un desdits tronçons, en l'occurrence le tronçon référencé 12 sur les figures, contribue aux réglages de la section d'entrée 8.

Le réglage des sections d'entrée 8 et de passage 9 est ainsi réalisé grâce à une conformation très simple du moyen de réglage 11.

Avantageusement, et tel que cela est illustré aux figures, le corps cylindrique du moyen de réglage 11 présente au moins un premier, un deuxième et un troisième tronçon 12, 12A, 13, lesdits premier et deuxième tronçons 12, 12A étant séparés par un premier épaulement 12B, tandis que les deuxième et troisième tronçons 12A, 13 sont séparés par un deuxième épaulement 14, ledit corps cylindrique étant agencé relativement au conduit pour que d'une part les premier et deuxième tronçons 12, 12A contribuent alternativement au réglage de la section d'entrée 8, et que d'autre part le deuxième épaulement 14 contribue au réglage de la section de passage 9.

Ainsi, le réglage des sections d'entrée 8 et de passage 9 est basé sur la mise en oeuvre de singularités géométriques du moyen de réglage 11, comme par exemple des changements de sections brusques et les épaulements qui y sont associés.

Avantageusement, l'organe d'ajustement 7 comprend un orifice de fuite 15 ménagé dans toute l'épaisseur du couvercle 3 entre les faces interne 3A et externe 3B, ledit orifice de fuite 15 formant une ouverture d'accès du conduit de fuite, c'est-à-dire faisant office d'interface entre l'intérieur de l'enceinte et ledit conduit de fuite.

Conformément au mode de réalisation représenté aux figures, la section d'entrée 8 est définie par la coopération de l'orifice de fuite 15 avec le moyen de réglage 11.

En d'autres termes, le moyen de réglage 11 va venir obturer en partie l'orifice de fuite 15 de façon à offrir à la vapeur présente dans l'enceinte une ouverture plus ou moins grande d'échappement.

De façon préférentielle, lorsque le moyen de réglage 11 se trouve dans la position indexée d'ouverture représentée à la figure 6, le premier tronçon 12 est engagé dans l'orifice de fuite 15, de telle sorte que la section d'entrée 8 présente une première forme annulaire.

Ainsi, dans l'exemple représenté à la figure 6, et qui correspond à la position indexée d'ouverture du moyen de réglage, le premier tronçon 12 présente une section circulaire de diamètre D1, tandis que l'orifice 15 présente une section circulaire de diamètre D2 supérieur à D1, le premier tronçon 12 étant enfilé axialement de façon sensiblement centrée dans l'orifice 15 de façon à définir avec ce dernier une couronne circulaire formant la section d'entrée 8.

De façon préférentielle, le diamètre D1 du premier tronçon est sensiblement compris entre 2 et 6 mm, et est de préférence sensiblement égal à 4 mm, tandis que le diamètre D2 de l'orifice 15 est sensiblement compris entre 6 et 10 mm, et est de préférence sensiblement égal à 8,7 mm.

En d'autres termes, la section d'entrée 8 est dans ce cas avantageusement comprise entre sensiblement 25,1 mm² et 51,3 mm², et est préférentiellement égale à environ 46,9 mm².

Avantageusement, lorsque le moyen de réglage 11 se trouve en position indexée de décompression (représentée à la figure 9) le deuxième tronçon 12A est engagé dans l'orifice de fuite 15 de telle sorte que la section d'entrée 8 présente une deuxième forme annulaire distincte de la première forme annulaire, du moins dans son dimensionnement.

Plus particulièrement, dans la variante correspondant à la figure 9, l'orifice 15 présente toujours une section circulaire de diamètre D2, tandis que le deuxième tronçon 12A présente une section circulaire de diamètre D3, le diamètre D3 étant supérieur à D1 et inférieur à D2.

Lorsque le moyen de réglage 11 se trouve en position indexée de décompression, le deuxième tronçon 12A est enfilé dans l'orifice 15, de façon coaxiale et centrée, de sorte qu'il définit avec ledit orifice 15 une deuxième couronne circulaire, de dimension plus réduite que celle de la couronne circulaire définie par le premier tronçon 12 et illustrée à la figure 6.

De façon préférentielle, le diamètre D3 du deuxième tronçon 12A est sensiblement compris entre 4 et 9 mm, et est de préférence sensiblement égal à 6,9 mm.

En d'autres termes, la section d'entrée 8 est dans ce cas avantageusement comprise entre sensiblement 9,4 mm² et 35,4 mm², et est préférentiellement égale à environ 24,8 mm².

Ainsi, la section d'entrée 8 présente une surface plus grande lorsque le moyen de réglage 11 se trouve en position indexée d'ouverture que lorsque le moyen de réglage 11 se trouve en position indexée de décompression.

Avantageusement, lorsque le moyen de réglage 11 se trouve en position indexée de régulation (représentée à la figure 12) le deuxième tronçon 12A est engagé dans l'orifice de fuite 15, de telle sorte que la section d'entrée 8 présente une troisième forme annulaire, en l'espèce sensiblement identique à la première forme annulaire définie précédemment. Ainsi, la section d'entrée 8 correspondant à la position indexée de régulation du moyen de réglage 11 est sensiblement identique à la section d'entrée 8 correspondant à la position indexée de décompression. Cette mesure technique est bien entendue tout à fait optionnelle et il est envisageable que la section d'entrée 8 varie sensiblement entre la position indexée de régulation et la position indexée de décompression.

Avantageusement, la section de passage 9 est définie par la coopération de la face externe 3B du couvercle 3 avec le moyen de réglage 11.

Ainsi, dans le cas particulier correspondant aux figures, la section de passage 9 est définie par la coopération de la face externe 3B du couvercle 3 avec le deuxième épaulement 14. En effet, ledit deuxième épaulement 14 surplombe la face externe 3B du couvercle 3, de façon à définir un passage de vapeur entre ladite face externe 3B et le deuxième épaulement 14.

De façon préférentielle, lorsque le moyen de réglage 11 se trouve en position indexée de régulation (représentée à la figure 12), le deuxième épaulement 14 vient en appui contre la face externe 3B du couvercle 3 de façon à obturer l'orifice de fuite 15, et ce tant que la pression régnant dans l'enceinte est inférieure à la pression de régulation prédéterminée, ledit deuxième épaulement 14 s'éloignant de la face externe sous l'effet de la force motrice générée par la pression, pour permettre l'échappement de vapeur lorsque la pression régnant dans l'enceinte atteint sensiblement ladite pression de régulation.

Ainsi, dans l'exemple illustré aux figures, lorsque le moyen de réglage 11 se trouve en position indexée de régulation, le deuxième épaulement 14 obture complètement (c'est-à-dire de manière étanche), si les conditions de pression le permettent, l'orifice 15, de sorte que la section de passage 9 est nulle tandis que la section d'entrée 8 est définie d'une part par le deuxième tronçon 12A de diamètre D3 et d'autre part par l'orifice 15 de diamètre D2. Dans cette position, lorsque la pression dans l'enceinte atteint sensiblement la pression de régulation, la soupape 11A se soulève légèrement à l'encontre de sa position de rappel élastique pour laisser passer de la vapeur par la section de passage 9. Lorsque suffisamment de vapeur s'est échappée pour ramener la pression interne en deçà de la pression de régulation, la soupape 11A est automatiquement ramenée dans la position illustrée à la figure 12, c'est-à-dire dans une position d'obturation, sous l'effet par exemple de la force de rappel d'un ressort de compression.

Afin d'obturer l'orifice 15, le deuxième épaulement 14 est avantageusement pourvu, à sa périphérie, d'un renflement circulaire 14A faisant office de joint d'étanchéité.

Avantageusement, lorsque le moyen de réglage 11 se trouve en position indexée d'ouverture (illustrée à la figure 6) le deuxième épaulement 14 est espacé d'une première distance H1 de la face externe 3B du couvercle 3.

Le flux de fuite de vapeur dispose ainsi d'un jeu de hauteur H1 entre la face externe 3B et l'épaulement 14 pour s'échapper vers la section de sortie 10 puis vers l'extérieur. Par conséquent, lorsque le moyen de réglage 11 de l'appareil 1 correspondant à la variante illustrée à la figure 6 se trouve en position indexée d'ouverture, la section d'entrée 8 est définie par l'orifice 15 de diamètre D2 et le premier tronçon 12 de diamètre D1, tandis que la section de passage 9 est caractérisée par la distance H1 séparant la face externe 3B du couvercle du deuxième épaulement 14.

De façon préférentielle, la distance H1 est sensiblement comprise entre 1 et 6 mm, et est de préférence sensiblement égale à 3 mm.

Avantageusement, lorsque le moyen de réglage 11 se trouve en position indexée de décompression (représentée à la figure 9) le deuxième épaulement 14 est espacé d'une deuxième distance H2 de la face externe 3B du couvercle 3. Ainsi, lorsque le moyen de réglage 11 de l'appareil 1 conforme au mode de réalisation illustré à la figure 9 se trouve en position indexée de décompression, la section d'entrée 8 est définie par la coopération du deuxième tronçon 12A de diamètre D3 et de l'orifice 15 de diamètre D2, tandis que la section de passage 9 est caractérisée par la distance H2 séparant la face externe 3B du couvercle 3 du second épaulement 14.

De façon préférentielle, la distance H2 est sensiblement comprise entre 0,3 et 2,5 mm et est de préférence sensiblement égale à 1,2 mm.

De façon avantageuse, la première distance H1 séparant le deuxième épaulement 14 de la face externe 3B lorsque le moyen de réglage 11 se trouve en position d'ouverture est supérieure à la deuxième distance H2 séparant l'épaulement 14 de la face externe 3B lorsque le moyen de réglage 11 se trouve en position indexée de décompression. Cela implique que la section de passage 9 est plus importante lorsque le moyen de réglage 11 se trouve en position indexée d'ouverture que lorsqu'il se trouve en position indexée de décompression.

On va maintenant décrire plus en détails la structure et le fonctionnement de la variante de réalisation illustrée aux figures.

Dans ce mode de réalisation, l'appareil 1 comprend un module 16 destiné à être rapporté sur le couvercle 3, par exemple de façon amovible grâce à un axe fileté 16A coopérant avec un trou 16B ménagé dans le couvercle 3. Le module 16 comprend un siège 17 sur lequel est monté à rotation selon l'axe X-X' une plaque intermédiaire de commande 18 dont le mouvement de rotation est contrôlé à l'aide d'une poignée 19, laquelle est de préférence directement fixée à la plaque intermédiaire 18 par l'intermédiaire de quilles de fixation 18A, 18B, de façon à réaliser un encastrement mécanique entre la poignée 19 et la plaque intermédiaire 18.

Avantageusement, le siège 17 du module 16 est coiffé d'un capot 26 au sein duquel est ménagé un logement central destiné à accueillir la poignée 19.

La plaque intermédiaire 18 est reliée fonctionnellement à la soupape 11A de façon à ce que la rotation de la plaque intermédiaire 18 commande le déplacement axial selon l'axe X-X' de la soupape 11A.

Avantageusement, la soupape 11A comprend une tête 21 évasée, tandis que la plaque intermédiaire 18 comprend une rampe 20 correspondante, conçue pour déplacer verticalement la tête 21.

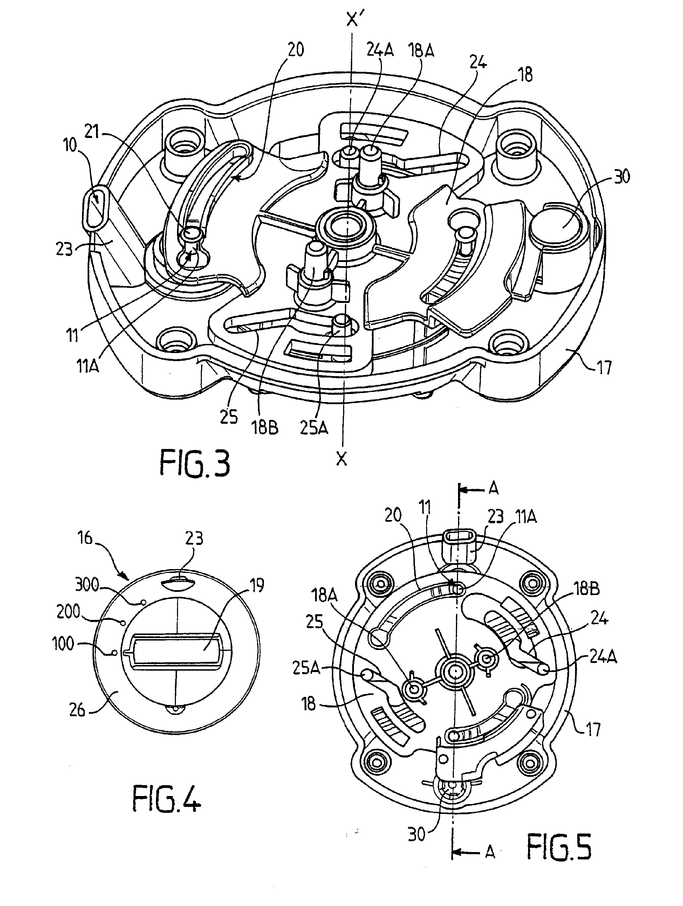

La rampe 20 permet ainsi de faire varier l'altitude de la tête 21 et donc de la soupape 11A, entre une position basse, représentée aux figures 3, 10, 11 et 12, correspondant à la position indexée de régulation de la soupape 11A, et une position haute, illustrée aux figures 4, 5 et 6, dans laquelle la soupape 11A se trouve à son altitude maximum, cette altitude maximum correspondant à la position indexée d'ouverture. Entre les deux positions extrémales décrites précédemment, la tête 21 peut se trouver dans une position intermédiaire prédéterminée, dans laquelle son altitude est supérieure à l'altitude minimum correspondant à la figure 12 mais inférieure à l'altitude maximum illustrée à la figure 6, cette position intermédiaire correspondant à la position indexée de décompression de la soupape 11A. Ainsi, l'utilisateur est en mesure, en tournant simplement la poignée 19, de piloter la décompression de l'appareil 1. Le caractère continu du mouvement rotatif de commande permet d'ailleurs à l'utilisateur de piloter très finement la décompression, puisqu'il n'est avantageusement pas limité aux trois positions indexées de la soupape 11A et peut positionner ladite soupape à l'altitude de son choix, grâce au caractère progressif, au moins partiellement, de la rampe 20.

La soupape 11A est quant à elle de préférence montée dans une cavité 22 ménagée dans le siège 17, ladite cavité 22 débouchant vers l'extérieur et étant cerclé d'un joint d'étanchéité 22A destiné à venir en contact avec la face externe 3B du couvercle 3, de façon à délimiter une chambre étanche au sein de laquelle peut se mouvoir la soupape 11A. Ladite chambre ainsi délimitée communique avec l'extérieur par l'intermédiaire d'un tuyau d'échappement 23, ledit tuyau d'échappement délimitant la section de sortie 10, laquelle est de préférence non ajustable c'est-à-dire fixée par construction.

En d'autres termes, la chambre susdite communique à l'amont avec l'intérieur de l'enceinte et à l'aval avec le tuyau d'échappement 23.

De façon préférentielle, la section de sortie 10 du tuyau 23 est aussi grande ou plus grande (en surface) que la section d'entrée 8. Cette caractéristique technique permet d'optimiser la vitesse de fuite de vapeur lorsque le moyen de réglage se trouve en position d'ouverture, et contribue ainsi, en coopération avec la section d'entrée 8, à empêcher toute montée en pression dangereuse de l'appareil.

L'invention repose ainsi préférentiellement sur une conception originale dans laquelle on pilote, en fonction de la section transversale de sortie, les sections transversales de fuite situées à l'amont de la section de sortie, cette dernière étant fixée par construction.

La plaque intermédiaire 18 est également avantageusement munie de lumières obliques 24, 25 coopérant avec des pions correspondant 24A, 25A solidaires respectivement des mâchoires 5, 6. Les lumières obliques 24, 25 sont agencées de telle sorte que la rotation de la plaque intermédiaire 18 entraîne le déplacement radial des pions correspondant 24A, 25A et donc le déplacement des mâchoires 5, 6 qui leur sont attachées.

Par conséquent, la plaque intermédiaire 18 assure simultanément la commande du déplacement axial de la soupape 11A et du déplacement radial des mâchoires.

La rampe 20 et les lumières obliques 24, 25 sont de préférence agencées pour que lorsque la soupape 11A est en position indexée d'ouverture, les mâchoires 5, 6 sont déverrouillées de sorte que l'utilisateur peut à sa guise enlever et remettre le couvercle sur la cuve 2. La plaque intermédiaire 18 est également agencée pour que lorsque la soupape 11A se trouve en position de décompression, les mâchoires 5, 6 sont cette fois verrouillées, et le restent bien entendu lorsque la soupape 11A atteint sa position de régulation.

Ainsi, tant que les mâchoires ne sont pas verrouillées, la soupape 11A se trouve en position d'ouverture.

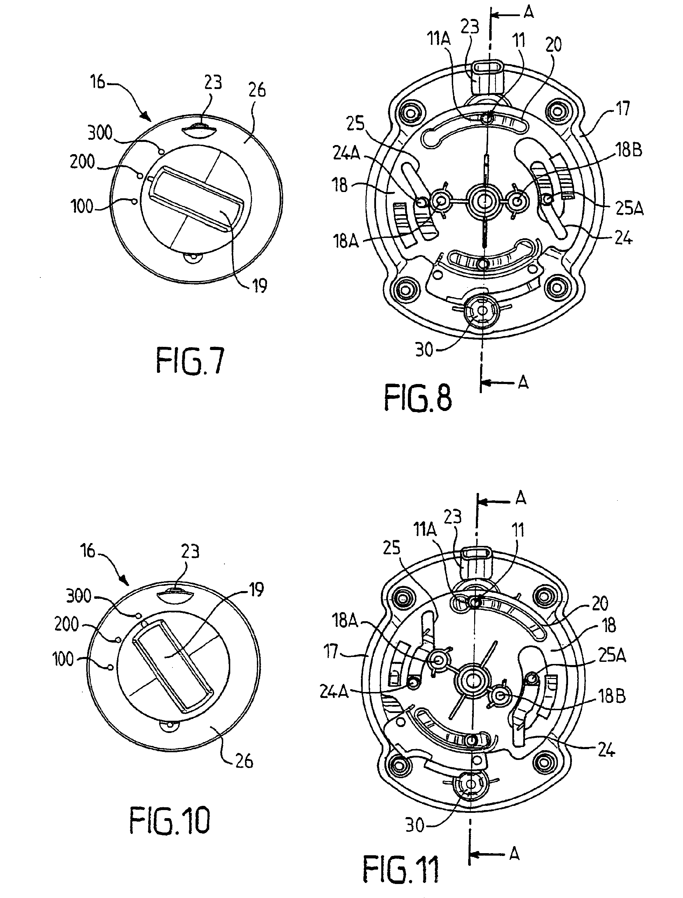

L'appareil 1 conforme à l'invention permet ainsi une décompression rapide et sécurisée, puisque l'utilisateur, lorsqu'il veut décompresser un appareil en fonctionnement (figures 10, 11 et 12) tourne d'abord la poignée 19 (dans le sens anti-horaire sur les figures) vers une position identifiée de décompression (figures 7, 8 et 9), dans laquelle il provoque une fuite de vapeur sans projection d'aliments en amenant le moyen de réglage dans sa position de décompression. Cette phase de décompression sécurisée étant achevée (lorsque la pression dans l'enceinte a atteint ou est en deçà de la pression prédéterminée de sécurité), il peut alors tourner encore la poignée 19 (dans le sens anti-horaire sur les figures) vers la position d'ouverture (figures 4, 5 et 6) dans laquelle la décompression de l'appareil sera parachevée en toute sécurité et rapidité, le moyen de réglage se trouvant alors en position de décompression.

On notera que la fin de l'opération de décompression sécurisée, correspondant à la position indexée de décompression de la soupape 11A, pourra être indiquée par un doigt manométrique 30 qui, selon sa position verticale, fournit un signal visuel à l'utilisateur.

Ledit doigt 30 peut également constituer un moyen de sécurité à l'ouverture /fermeture, et coopérer ainsi avec la plaque intermédiaire 18 pour empêcher la rotation de cette dernière de la position de décompression à la position d'ouverture tant que la pression régnant dans l'enceinte excède la pression de sécurité prédéterminée.

En définitive, l'invention permet notamment :
- la décompression de l'appareil sans projection alimentaire et de préférence sans arrêter la source de chauffe,
- l'interdiction pour l'appareil de monter en pression s'il est mal fermé,
et ce grâce à une conception simple, ergonomique et compacte.

L'invention concerne donc également, comme cela a déjà été évoqué dans ce qui précède, un procédé de cuisson d'aliments à l'aide d'un appareil domestique 1 de cuisson sous pression agencé pour former une enceinte de cuisson, ledit appareil 1 comprenant un organe d'ajustement 7 de la pression à l'intérieur de l'enceinte, ledit organe 7 comprenant lui-même un conduit de fuite permettant l'établissement d'un écoulement de fuite de vapeur de l'intérieur de l'enceinte vers l'extérieur de l'appareil 1, ledit conduit définissant d'une part une section d'entrée 8 de vapeur, par laquelle la vapeur contenue dans l'enceinte entre dans le conduit, et d'autre part une section de passage 9, située à l'aval de la section d'entrée 8 dans le sens de l'écoulement de fuite, l'organe d'ajustement 7 comprenant un moyen de réglage 11 des sections d'entrée 8 et de passage 9/

Conformément à l'invention, ledit procédé comprend d'une part une étape d'ouverture, dans laquelle on règle, à l'aide du moyen de réglage 11, les sections d'entrée et de passage pour permettre une fuite de vapeur par le conduit tout en empêchant que la pression régnant au sein de l'enceinte puisse monter au-delà d'une pression de sécurité prédéterminée, et d'autre part une étape de décompression, au cours de laquelle on règle, à l'aide du moyen de réglage 11, les sections d'entrée 8 et de passage 9 pour permettre une décompression la plus rapide possible de l'enceinte jusqu'à la pression de sécurité prédéterminée, sans projection sensible d'aliments vers l'extérieur de l'appareil 1.

Avantageusement, l'étape d'ouverture est postérieure à l'étape de décompression.

De façon encore plus préférentielle, l'étape d'ouverture est effectuée lorsque la pression régnant au sein de l'enceinte est inférieure ou égale à la pression de sécurité prédéterminée.

L'invention repose donc sur la mise en oeuvre d'une décompression séquentielle en deux temps, au cours de laquelle l'utilisateur commence par placer l'appareil en position de décompression, le conduit de fuite étant conformé et dimensionné pour permettre une chute de pression la plus rapide possible de l'enceinte sans projection alimentaire, puis, lorsque la pression dans l'enceinte a atteint le niveau de sécurité prédéterminé, l'utilisateur place l'appareil en position d'ouverture, dans laquelle le conduit de fuite est conformé et dimensionné pour permettre de ramener rapidement la pression à l'intérieur de l'enceinte à la pression atmosphérique, tout en empêchant la pression de dépasser le niveau prédéterminé de sécurité.

De façon complémentaire et indépendante, en lien avec le concept technique général décrit ci-avant, l'invention telle que revendiquée vise également un appareil domestique 1 de cuisson d'aliments sous pression agencé pour former une enceinte de cuisson, ledit appareil 1 comprenant un conduit de fuite permettant l'établissement d'un écoulement de fuite de vapeur de l'intérieur de l'enceinte vers l'extérieur de l'appareil 1, ledit conduit définissant d'une part une section d'entrée 8 de vapeur, par laquelle la vapeur contenue dans l'enceinte entre dans le conduit, et d'autre part une section de passage 9, située à l'aval de la section d'entrée 8 dans le sens de l'écoulement de fuite, ledit appareil 1 comprenant également un moyen de réglage 11 des sections d'entrée 8 et de passage 9, ledit moyen de réglage 11 étant mobile entre au moins d'une part une position indexée d'ouverture, dans laquelle il règle les sections d'entrée 8 et de passage 9 pour permettre une fuite de vapeur par le conduit tout en empêchant que la pression régnant au sein de l'enceinte puisse monter au-delà d'une pression de sécurité prédéterminée, et d'autre part une position indexée de décompression, dans laquelle il règle les sections d'entrée 8 et de passage 9 pour permettre une décompression la plus rapide possible de l'enceinte jusqu'à la pression de sécurité prédéterminée.

## Revendications

1. Appareil domestique (1) de cuisson d'aliments sous pression comprenant une cuve (2) et un couvercle (3) destiné à être rapporté sur ladite cuve (2) pour former une enceinte de cuisson, ledit appareil (1) comprenant un organe d'ajustement (7) de la pression à l'intérieur de l'enceinte, ledit organe (7) comprenant lui-même un conduit de fuite permettant l'établissement d'un écoulement de fuite de vapeur de l'intérieur de l'enceinte vers l'extérieur de l'appareil (1), ledit conduit définissant d'une part une section d'entrée (8) de vapeur, par laquelle la vapeur contenue dans l'enceinte entre dans le conduit, et d'autre part une section de passage (9), située à l'aval de la section d'entrée (8) dans le sens de l'écoulement de fuite, **caractérisé en ce que** l'organe d'ajustement (7) comprend un moyen de réglage (11) des sections d'entrée (8) et de passage (9), ledit moyen de réglage (11) étant mobile entre au moins d'une part une position d'ouverture, dans laquelle il règle les sections d'entrée (8) et de passage (9) pour permettre une fuite de vapeur par le conduit tout en empêchant que la pression régnant au sein de l'enceinte puisse monter au-delà d'une pression de sécurité prédéterminée compatible avec une ouverture sécurisée du couvercle (3), et d'autre part une position indexée de décompression, dans laquelle il règle les sections d'entrée (8) et de passage (9) pour permettre une décompression la plus rapide possible de l'enceinte jusqu'à la pression de sécurité prédéterminée, sans projection sensible d'aliments vers l'extérieur de l'appareil (1).

2. Appareil (1) selon la revendication 1 **caractérisé en ce que** la position d'ouverture est une position indexée.

3. Appareil (1) selon l'une des revendications **1** à **2 caractérisé en ce qu'**il comprend une soupape de régulation de pression (11A), ladite soupape (11A) formant le moyen de réglage (11).

4. Appareil (1) selon la revendication **3 caractérisé en ce que** le moyen de réglage (11) est susceptible de se trouver dans au moins une position indexée de régulation, dans laquelle d'une part il interdit sensiblement toute communication de l'intérieur de l'enceinte avec l'extérieur tant que la pression régnant dans l'enceinte est inférieure à une pression de régulation prédéterminée et d'autre part il met en communication l'intérieur de l'enceinte avec l'extérieur dès que la pression régnant dans l'enceinte atteint sensiblement ladite pression de régulation prédéterminée.

5. Appareil (1) selon l'une des revendications **1** à **4**, **caractérisé en ce que** l'enceinte de cuisson est destinée à être soumise à l'action d'une source de chauffe, le moyen de réglage (11), lorsqu'il se trouve dans sa position de décompression, réglant les sections d'entrée (8) et de passage (9) pour permettre une décompression la plus rapide possible de l'enceinte jusqu'à la pression de sécurité prédéterminée, sans projection sensible d'aliments vers l'extérieur de l'appareil (1) et sans arrêter la source de chauffe.

6. Appareil (1) selon l'une des revendications **1** à **5 caractérisé en ce que** les sections d'entrée (8) et de passage (9) sont orientées sensiblement en oblique l'une par rapport à l'autre, et sont de préférence orientées sensiblement transversalement l'une par rapport à l'autre.

7. Appareil (1) selon l'une des revendications **1** à **6 caractérisé en ce que** ledit couvercle (3) comprend une face interne (3A), destinée à se trouver en regard de la cuve (2), et une face externe (3B) opposée, destinée à être orientée vers l'extérieur de la cuve (2).

8. Appareil (1) selon la revendication **7 caractérisé en ce que** le moyen de réglage (11) est monté à coulissement sur le couvercle (3).

9. Appareil (1) selon la revendication **8 caractérisé en ce que** le moyen de réglage (11) comprend un corps cylindrique présentant au moins deux tronçons (12, 13) séparés par un épaulement (14), ledit épaulement (14) contribuant au réglage de la section de passage (9), tandis qu'au moins un desdits tronçons (12) contribue au réglage de la section d'entrée (8).

10. Appareil (1) selon la revendication **9 caractérisé en ce que** le corps cylindrique présente au moins un premier, un deuxième et un troisième tronçon (12, 12A, 13), lesdits premier et deuxième tronçons (12, 12A) étant séparés par un premier épaulement (12B), tandis que les deuxième et troisième tronçons (12A, 13) sont séparés par un deuxième épaulement (14), ledit corps cylindrique étant agencé relativement au conduit pour que d'une part les premier et deuxième tronçons (12, 12A) contribuent au réglage de la section d'entrée (8), et que d'autre part le deuxième épaulement (14) contribue au réglage de la section de passage (9).

11. Appareil (1) selon l'une des revendications **7** à **10 caractérisé en ce que** l'organe d'ajustement (7) comprend un orifice de fuite (15), ménagé dans le couvercle (3) et formant une ouverture d'accès du conduit de fuite, la section d'entrée (8) étant définie par la coopération de l'orifice (15) avec le moyen de réglage (11).

12. Appareil (1) selon les revendications **10** et **11 caractérisé en ce que** lorsque le moyen de réglage (11) se trouve en position d'ouverture, le premier tronçon (12) est engagé dans l'orifice de fuite (15) de telle sorte que la section d'entrée (8) présente une première forme annulaire.

13. Appareil (1) selon les revendications **10** et **11** ou selon la revendication 12 **caractérisé en ce que** lorsque le moyen de réglage (11) se trouve en position de décompression, le deuxième tronçon (12A) est engagé dans l'orifice de fuite (15) de telle sorte que la section d'entrée (8) présente une deuxième forme annulaire.

14. Appareil (1) selon l'une des revendications **7** à **13 caractérisé en ce que** la section de passage (9) est définie par la coopération de la face externe (38) du couvercle (3) avec le moyen de réglage (11).

15. Appareil (1) selon les revendications **11** et **14 caractérisé en ce que** la section de passage (9) est définie par la coopération de la face externe (3B) du couvercle (3) avec le deuxième épaulement (14).

16. Appareil (1) selon les revendications **4** et **15 caractérisé en ce que** lorsque le moyen de réglage (11) se trouve en position indexée de régulation, le deuxième épaulement (14) est en appui contre la face externe (3B) du couvercle (3), de façon à obturer l'orifice de fuite (15), et ce tant que la pression régnant dans l'enceinte est inférieure à la pression de régulation prédéterminée, ledit deuxième épaulement (14) s'éloignant de la face externe (3B) pour permettre l'échappement de vapeur lorsque la pression régnant dans l'enceinte atteint sensiblement ladite pression de régulation.

17. Appareil (1) selon la revendication **15** ou **16 caractérisé en ce que** lorsque le moyen de réglage (11) se trouve en position d'ouverture, le deuxième épaulement (14) est espacé d'une première distance (H1) de la face externe (3B) du couvercle (3).

18. Appareil (1) selon l'une des revendications **16** ou **17 caractérisé en ce que** lorsque le moyen de réglage (11) se trouve en position de décompression, le deuxième épaulement (14) est espacé d'une deuxième distance (H2) de la face externe (3B) du couvercle (3).

19. Appareil (1) selon l'une des revendications **1** à **18 caractérisé en ce que** le conduit définit une section de sortie de vapeur (10), située à l'aval de la section de passage (9) dans le sens de l'écoulement de fuite, ladite section de sortie de vapeur (10) étant non ajustable.

20. Appareil (1) selon l'une des revendications **1** à **19 caractérisé en ce qu'**il est constitué par un autocuiseur.

21. Procédé de cuisson d'aliments à l'aide d'un appareil domestique (1) de cuisson sous pression agencé pour former une enceinte de cuisson, ledit appareil (1) comprenant un organe d'ajustement (7) de la pression à l'intérieur de l'enceinte, ledit organe (7) comprenant lui-même un conduit de fuite permettant l'établissement d'un écoulement de fuite de vapeur de l'intérieur de l'enceinte vers l'extérieur de l'appareil (1), ledit conduit définissant d'une part une section d'entrée (8) de vapeur, par laquelle la vapeur contenue dans l'enceinte entre dans le conduit, et d'autre part une section de passage (9), située à l'aval de la section d'entrée (8) dans le sens de l'écoulement de fuite **caractérisé en ce que** l'organe d'ajustement (7) comprend un moyen de réglage (11) des sections d'entrée (8) et de passage (9), ledit procédé comprenant d'une part une étape d'ouverture, dans laquelle on règle, à l'aide du moyen de réglage (11), les sections d'entrée et de passage pour permettre une fuite de vapeur par le conduit tout en empêchant que la pression régnant au sein de l'enceinte puisse monter au-delà d'une pression de sécurité prédéterminée compatible avec une ouventure sécurisée du couvercle (3), et d'autre part une étape de décompression, au cours de laquelle on règle, à l'aide du moyen de réglage (11), les sections d'entrée (8) et de passage (9) pour permettre une décompression la plus rapide possible de l'enceinte jusqu'à la pression de sécurité prédéterminée, sans projection sensible d'aliments vers l'extérieur de l'appareil (1).

22. Procédé selon la revendication **21**, **caractérisé en ce que** l'étape d'ouverture est postérieure à l'étape de décompression.

23. Procédé selon la revendication **22 caractérisé en ce que** l'étape d'ouverture est effectuée lorsque la pression régnant au sein de l'enceinte est inférieure ou égale à la pression de sécurité prédéterminée.

## Claims

1. Household food pressure cooking appliance (1) comprising a vessel (2) and a lid (3) intended to be mounted and locked on the vessel (2) to form a cooking chamber, said appliance (1) comprising an adjustment device (7) of the pressure inside the chamber, said device (7) itself comprising a leakage pipe used to establish a steam leakage flow from inside the chamber to outside the appliance (1), said pipe defining, firstly, a steam inlet section (8), through which the steam contained in the chamber enters the pipe, and, secondly, a flow section (9), located downstream from the inlet section (8) in the direction of the leakage flow, **characterised in that** the adjustment device (7) comprises setting means (11) of the inlet section (8) and flow section (9), said setting means (11) being mobile between at least, firstly, an open position, wherein it sets the inlet section (8) and flow section (9) to enable a steam leakage via the pipe while preventing the pressure applied in the chamber rising above a predetermined safety pressure compatible with a safe opening of the lid (3), and, secondly, an indexed decompression position, wherein it sets the inlet section (8) and flow section (9) to enable the quickest possible decompression of the chamber to the predetermined safety pressure, without substantial projection of foods outside the appliance (1).

2. Appliance (1) according to claim 1 **characterised in that** the open position is an indexed position.

3. Appliance (1) according to any of claims 1 to 2 **characterised in that** it comprises a pressure regulation valve (11A), said valve (11A) forming the setting means (11).

4. Appliance (1) according to claim 3 **characterised in that** the setting means (11) is liable to be in at least one indexed regulation position, wherein, firstly, it substantially prevents any connection of the inside of the chamber to the outside while the pressure applied in the chamber is less than the predetermined regulation pressure and, secondly, it connects the inside of the chamber with the outside once the pressure applied in the chamber has substantially reached said predetermined regulation pressure.

5. Appliance (1) according to any of claims 1 to 4, **characterised in that** the cooking chamber is intended to be subjected to the effect of a heating source, the setting means (11), when it is in its decompression position, setting the inlet section (8) and flow section (9) to enable the quickest possible decompression of the chamber to the predetermined safety pressure, without substantial projection of foods outside the appliance (1) without switching off the heating source.

6. Appliance (1) according to any of claims 1 to 5 **characterised in that** the inlet section (8) and flow section (9) are oriented substantially at an angle with respect to each other, and are preferentially oriented substantially transversally with respect to each other.

7. Appliance (1) according to any of claims 1 to 6 **characterised in that** said lid (3) comprises an internal face (3A) intended to be located opposite the vessel (2), and an opposite external face (3B), intended to be oriented towards the outside of the vessel (2).

8. Appliance (1) according to claim 7 **characterised in that** the setting means (11) is fitted in a sliding configuration onto the lid (3).

9. Appliance (1) according to claim 8 **characterised in that** the setting means (11) comprises a cylindrical body comprising at least two segments (12, 13) separated by a shoulder (14), said shoulder (14) taking part in the setting of the flow section (9), while at least one of said segments (12) takes part in the settings of the inlet section (8).

10. Appliance (1) according to claim 9 **characterised in that** the cylindrical body comprises at least a first, a second and a third segment (12, 12A, 13), said first and second segments (12, 12A) being separated by a first shoulder (12B), said second and third segments (12A, 12B) being separated by a second shoulder (14), said cylindrical body being arranged with respect to the pipe such that, firstly, the first and second segments (12, 12A) take part in alternation in the setting of the inlet section (8), and that, secondly, the second shoulder (14) takes part in the setting of the flow section (9).

11. Appliance (1) according to any of claims 7 to 10 **characterised in that** the adjustment device (7) comprises a leakage orifice (15), provided in the lid (3) and forming an access opening to the leakage pipe, the inlet section (8) being defined by the cooperation of the leakage orifice (15) with the setting means (11).

12. Appliance (1) according to claims 10 and 11 **characterised in that**, when the setting means (11) is in the indexed open position, the first segment (12) is inserted into the leakage orifice (15), such that the inlet section (8) has a first annular shape.

13. Appliance (1) according to claims 10 and 11 or according to claim 12 **characterised in that**, when the setting means (11) is in the decompression position, the second segment (12A) is inserted into the leakage orifice (15), such that the inlet section (8) has a second annular shape.

14. Appliance (1) according to any of claims 7 to 13 **characterised in that** Lhe flow section (9) is defined by the cooperation of the external face (3B) of the lid (3) with the setting means (11).

15. Appliance (1) according to the claims 11 and 14 **characterised in that** the flow section (9) is defined by the cooperation of the external face (3B) of the lid (3) with Lhe second shoulder (14).

16. Appliance (1) according to claims 4 and 15 **characterised in that**, when the setting means (11) is in the indexed regulation position, the second shoulder (14) rests against the external face (38) of the lid (3) so as to seal the leakage orifice (15), while the pressure applied in the chamber is less than the predetermined regulation pressure, said second shoulder (14) moving away from the external face (3B) to enable the outflow of steam when the pressure applied in the chamber has substantially reached said regulation pressure.

17. Appliance (1) according to claim 15 or 16
**characterised in that**, when the setting means (11) is in the open position, the second shoulder (14) is at an interval of a first distance (H1) from the external face (3B) of the lid (3).

18. Appliance (1) according to any of claims 16 or 17 **characterised in that**, when the setting means (11) is in the decompression position, the second shoulder (14) is at an interval of a second distance (H2) from the external face (3B) of the lid (3).

19. Appliance (1) according to any of claims 1 to 18 **characterised in that** the pipe defines a steam outlet section (10), located downstream from the flow section (9) in the direction of the leakage flow, said steam outlet section (10) being non-adjustable.

20. Appliance (1) according to any of claims 1 to 19 **characterised in that** it consists of a pressure cooker.

21. Method to cook food using a household pressure cooking appliance (1) arranged to form a cooking chamber, said appliance (1) comprising an adjustment device (7) of the pressure inside the chamber, said device (7) itself comprising a leakage pipe used to establish a steam leakage flow from inside the chamber to outside the appliance (1), said pipe defining, firstly, a steam inlet section (8), through which the steam contained in the chamber enters the pipe, and, secondly, a flow section (9), located downstream from the inlet section in the direction of the leakage flow, **characterized in that** the adjustment device (7) comprising setting means (11) of the inlet section (8) and flow section (9), said method comprising, firstly, an opening step, wherein, using the setting means (11), the inlet and flow sections are set to enable a steam leakage via the pipe while preventing the pressure applied in the chamber rising above a predetermined safety pressure compatible with a safe opening of the lid (3), and, secondly, a decompression step, during which, using the setting means (11), the inlet section (8) and flow section (9) are set to enable the quickest possible decompression of the chamber to the predetermined safety pressure, without substantial projection of foods outside the appliance (1).

22. Method according to claim 21, **characterised in that** the opening step is subsequent Lo the decompression step.

23. Method according to claim 22 **characterised in that** the opening step is carried out when the pressure applied inside the chamber is less than or equal to the predetermined safety pressure.

## Patentansprüche

1. Haushalts-Druckgargerät (1) für Lebensmittel, umfassend ein Gefäß (2) und einen Deckel (3), der dazu vorgesehen ist, auf das Gefäß (2) aufgesetzt zu werden, um einen Garraum zu bilden, wobei das Gerät (1) ein Organ zur Einstellung (7) des Drucks im Inneren des Raumes umfasst, wobei das Organ (7) selbst einen Ablasskanal umfasst, der die Herstellung eines Dampf-Ablassflusses vom Inneren des Raums zum Äußeren des Gerätes (1) ermöglicht, wobei der Kanal einerseits einen Dampf-Eingangsabschnitt (8) definiert, durch den der Dampf, der im Raum enthalten ist, in den Kanal eintritt, und andererseits einen Durchgangsabschnitt (9), der sich unterhalb des Eingangsabschnitts (8) in Richtung des Ablassflusses befindet, **dadurch gekennzeichnet, dass** das Einstellungsorgan (7) ein Regulierungsmittel (11) des Eingangs- (8) und Durchgangsabschnittes (9) umfasst, wobei das Regulierungsmittel (11) zwischen mindestens einerseits einer Öffnungsposition, in der es den Eingangs- (8) und Durchgangsabschnitt (9) reguliert, um einen Dampfablass durch den Kanal zu ermöglichen, wobei gleichzeitig verhindert wird, dass der Druck, der im Inneren des Raums herrscht, einen vorbestimmten Sicherheitsdruck übersteigen kann, der mit einer Sicherheitsöffnung des Deckels (3) kompatibel ist, und andererseits einer indexierten Position der Druckminderung beweglich ist, in der es den Eingangs- (8) und Durchgangsabschnitt (9) reguliert, um so schnell wie möglich eine Druckminderung des Raumes bis zum vorbestimmten Sicherheitsdruck zu ermöglichen, ohne dass Nahrungsmittel wesentlich aus dem Gerät (1) nach außen ausgeworfen werden.

2. Gerät (1) nach Anspruch 1, **dadurch gekennzeichnet, dass** die Öffnungsposition eine indexierte Position ist.

3. Gerät (1) nach einem der Ansprüche 1 bis 2, **dadurch gekennzeichnet, dass** es ein Ventil zur Regulierung des Drucks (11A) umfasst, wobei das Ventil (11A) das Regulierungsmittel (11) bildet.

4. Gerät (1) nach Anspruch 3, **dadurch gekennzeichnet, dass** das Regulierungsmittel (11) sich in mindestens einer indexierten Regulierungsposition befinden kann, in der es einerseits im Wesentlichen jede Kommunikation des Inneren des Raumes mit dem Äußeren unterbindet, solange der Druck, der im Behälter herrscht, niedriger als ein vorbestimmter Reguli-erungsdruck ist, und andererseits das Innere des Raums mit dem Äußeren in Verbindung bringt, sobald der Druck, der im Raum herrscht, im Wesentlichen den vorbestimmten Regulierungsdruck erreicht.

5. Gerät (1) nach einem der Ansprüche 1 bis 4, **dadurch gekennzeichnet, dass** der Garraum dazu bestimmt ist, der Wirkung einer Wärmequelle unterworfen zu werden, wobei das Regulierungsmittel (11), wenn es sich in seiner Druckminderungsposition befindet, den Eingangs- (8) und Durchgangsabschnitt (9) reguliert, um so schnell wie möglich eine Druckminderung des Raumes bis zum vorbestimmten Sicherheitsdruck zu ermöglichen, ohne dass Nahrungsmittel wesentlich aus dem Gerät (1) nach außen ausgeworfen werden, und ohne die Wärmequelle abzustellen.

6. Gerät (1) nach einem der Ansprüche 1 bis 5, **dadurch gekennzeichnet, dass** der Eingangs- (8) und Durchgangsabschnitt (9) im Wesentlichen schräg zueinander ausgerichtet sind und vorzugsweise im Wesentlichen transversal zueinander ausgerichtet sind.

7. Gerät (1) nach einem der Ansprüche 1 bis 6, **dadurch gekennzeichnet, dass** der Deckel (3) eine Innenseite (3A), die dazu vorgesehen ist, gegenüber dem Gefäß (2) angeordnet zu sein, und eine gegenüberliegende Außenseite (3B) umfasst, die dazu vorgesehen ist, in Richtung auf das Äußere des Gefäßes (2) ausgerichtet zu sein.

8. Gerät (1) nach Anspruch 7, **dadurch gekennzeichnet, dass** das Regulierungsmittel (11) verschiebbar auf dem Deckel (3) angebracht ist.

9. Gerät (1) nach Anspruch 8, **dadurch gekennzeichnet, dass** das Regulierungsmittel (11) einen zylindrischen Körper umfasst, der mindestens zwei Teile (12, 13) aufweist, die durch einen Vorsprung (14) getrennt sind, wobei der Vorsprung (14) zur Regulierung des Durchgangsabschnitts (9) beiträgt, während mindestens einer dieser Teile (12) zur Regulierung des Eingangsabschnitts (8) beiträgt.

10. Gerät (1) nach Anspruch 9, **dadurch gekennzeichnet, dass** der zylindrische Körper mindestens einen ersten, einen zweiten und einen dritten Teil (12, 12A , 13) aufweist, wobei der erste und der zweite Teil (12, 12A) durch einen ersten Vorsprung (12B) getrennt sind, während der zweite und der dritte Teil (12A, 13) durch einen zweiten Vorsprung (14) getrennt sind, wobei der zylindrische Körper bezüglich des Kanals so angeordnet ist, dass einerseits der erste und der zweite Teil (12, 12A) zur Regulierung des Eingangsabschnitts (8) beitragen, und andererseits der zweite Vorsprung (14) zur Regulierung des Durchgangsabschnitts (9) beiträgt.

11. Gerät (1) nach einem der Ansprüche 7 bis 10, **dadurch gekennzeichnet, dass** das Einstellungsorgan (7) ein Ablassloch (15) aufweist, das im Deckel (3) angebracht ist, und eine Zugangsöffnung des Ablasskanals bildet, wobei der Eingangsabschnitt (8) durch das Zusammenwirken des Lochs (15) mit dem Regulierungsmittel (11) definiert ist.

12. Gerät (1) nach Anspruch 10 und 11, **dadurch gekennzeichnet dass**, wenn sich des Regulierungsmittel (11) in der Öffnungsposition befindet, der erste Teil (12) in das Ablassloch (15) eingreift, so dass der Eingangsabschnitt (8) eine erste Ringform aufweist.

13. Gerät (1) nach Anspruch 10 und 11 oder nach Anspruch 12, **dadurch gekennzeichnet dass**, wenn sich das Regulierungsmittel (11) in der Druckminderungsposition befindet, der zweite Teil (12A) in das Ablassloch (15) eingreift, so dass der Eingangsabschnitt (8) eine zweite Ringform aufweist.

14. Gerät (1) nach einem der Ansprüche 7 bis 13, **dadurch gekennzeichnet, dass** der Durchgangsabschnitt (9) durch das Zusammenwirken der Außenseite (3B) des Deckels (3) mit dem Regulierungsmittel (11) definiert ist.

15. Gerät (1) nach Anspruch 11 und 14, **dadurch gekennzeichnet, dass** der Durchgangsabschnitt (9) durch das Zusammenwirken der Außenseite (3B) des Deckels (3) mit dem zweiten Vorsprung (14) definiert ist.

16. Gerät (1) nach Anspruch 4 und 15, **dadurch gekennzeichnet dass,** wenn sich des Regulierungsmittel (11) in der indexierten Regulierungsposition befindet, der zweite Vorsprung (14) gegen die Außenseite (3B) des Deckels (3) gestützt ist, um das Ablassloch (15) zu verschließen, und dies, solange der Druck, der im Raum herrscht, niedriger als der vorbestimmte Regulierungsdruck ist, wobei sich der zweite Vorsprung (14) von der Außenseite (3B) entfernt, um das Austreten von Dampf zu ermöglichen, wenn der Druck, der im Raum herrscht, im Wesentlichen den Regulierungsdruck erreicht.

17. Gerät (1) nach Anspruch 15 oder 16, **dadurch gekennzeichnet, dass,** wenn sich das Regulierungsmittel (11) in der Öffnungsposition befindet, der zweite Vorsprung (14) um einen ersten Abstand (H1) von der Außenseite (3B) des Deckels (3) entfernt ist.

18. Gerät (1) nach einem der Ansprüche 16 oder 17, **dadurch gekennzeichnet, dass**, wenn sich das Regulierungsmittel (11) in der Druckminderungsposition befindet, der zweite Vorsprung (14) um einen zweiten Abstand (H2) von der Außenseite (3B) des Deckels (3) entfernt ist.

19. Gerät (1) nach einem der Ansprüche 1 bis 18, **dadurch gekennzeichnet, dass** der Kanal einen Dampf-Ausgangsabschnitt (10) definiert, der sich unterhalb des Durchgangsabschnitts (9) in Richtung des Ablassflusses befindet, wobei der Dampf-Ausgangsabschnitt (10) nicht einstellbar ist.

20. Gerät (1) nach einem der Ansprüche 1 bis 19, **dadurch gekennzeichnet, dass** es aus einem Schnellkochtopf besteht.

21. Verfahren zum Garen von Lebensmitteln mithilfe eines Haushalts-Druckgargerätes (1), das so angebracht ist, um einen Garraum zu bilden, wobei das Gerät (1) ein Organ zur Einstellung (7) des Drucks im Inneren des Raums umfasst, wobei das Organ (7) selbst einen Ablasskanal umfasst, der die Herstellung eines Dampf-Ablassflusses vom Inneren des Raums zum Äußeren des Gerätes (1) ermöglicht, wobei der Kanal einerseits einen Dampf-Eingangsabschnitt (8) definiert, durch den der Dampf, der im Raum enthalten ist, in den Kanal eintritt, und andererseits einen Durchgangsabschnitt (9), der sich unterhalb des EingangsabschniLts (8) in Richtung des Ablassflusses befindet, **dadurch gekennzeichnet, dass** das Einstellungsorgan (7) ein Regulierungsmittel (11) des Eingangs- (8) und Durchgangsabschnittes (9) umfasst, wobei das Verfahren einerseits einen Öffnungsschritt, in dem mithilfe eines Regulierungsmittels (11) der Eingangs- und der Durchgangsabschnitt reguliert wird, um einen Dampfablass durch den Kanal zu ermöglichen, wobei gleichzeitig verhindert wird, dass der Druck, der im Inneren des Raumes herrscht, einen vorbestimmten Sicherheitsdruck übersteigen kann, der mit einer Sicherheitsöffnung des Deckels (3) kompatibel ist, und andererseits einen Druckminderungsschritt umfasst, während dessen mithilfe des Regulierungsmittels (11) der Eingangs- (8) und Durchgangsabschnitt (9) reguliert wird, um so schnell wie möglich eine Druckminderung des Raumes bis zum vorbestimmten Sicherheitsdruck zu ermöglichen, ohne dass Nahrungsmittel wesentlich aus dem Gerät (1)nach außen ausgeworfen werden.

22. Verfahren nach Anspruch 21, **dadurch gekennzeichnet, dass** der Öffnungsschritt nach dem Druckminderungsschritt erfolgt.

23. Verfahren nach Anspruch 22, **dadurch gekennzeichnet, dass** der Öffnungsschritt erfolgt, wenn der Druck, der im Inneren des Raumes herrscht, geringer als der oder gleich dem vorbestimmte(n) Sicherheitsdruck ist.
